# EUROPÄISCHE PATENTSCHRIFT

(11) **EP 0 534 578 B1**
(45) Veröffentlichungstag und Bekanntmachung des Hinweises auf die Patenterteilung: **29.11.1995**
(21) Anmeldenummer: 92250210.9
(22) Anmeldetag: 11.08.1992
(51) Int. Cl.: H02B 1/32

(54) **Traganordnung für elektrische Geräte**
Support device for electrical apparatus
Dispositif de support pour appareils électriques

(30) Priorität: 26.09.1991 DE 4132387
(43) Veröffentlichungstag der Anmeldung: 31.03.1993
(73) Patentinhaber: SIEMENS AKTIENGESELLSCHAFT, 80333 München (DE)
(72) Erfinder: Genzel, Rolf-Günter, W-6127 Lützelbach (DE); Zeimetz, Karl-Josef, W-5561 Plein (DE); Festerling, Walter, W-4708 Kamen (DE)

(56) Entgegenhaltungen:
- EP-A- 0 167 833
- FR-A- 1 573 477
- US-A- 3 148 311
- US-A- 4 787 011

## Beschreibung

Die Erfindung betrifft eine Traganordnung für elektrische Geräte in einer Niederspannungs-Schaltanlage, bestehend aus zwei parallel zueinander angeordneten Tragschienen und wenigstens einem die Tragschienen überbrückenden Geräteträger zur Aufnahme der Geräte, wobei der Geräteträger mittels abragender Zapfen in Löcher der Tragschienen einhängbar und durch Befestigungsschrauben mit den Tragschienen verbindbar ist.

Eine Traganordnung dieser Art ist beispielsweise durch die DE-A-1 665 984 bekannt geworden. Die Befestigung der Geräteträger ist hierbei auf zwei nacheinander auszuführende Vorgänge verteilt, nämlich das Einhängen des Geräteträgers in die Löcher und das anschließende, durch das Gewicht des Geräteträgers nicht beeinflußte Eindrehen von Befestigungsschrauben. Ferner läßt sich der Geräteträger bei geeigneter Anordnung von Lochreihen in den Tragschienen in einer vielzahl vertikaler Positionen befestigen. Die vertikalen Tragschienen sind dabei in der Tiefenerstreckung der Schaltanlage hintereinanderliegend angeordnet, wodurch auch die Geräteträger diese Position einnehmen. Um Geräte von der Frontseite der Schaltanlage her montieren zu können, sind an den Geräteträgern weitere, sich parallel zur Frontseite der Anlage erstreckende Tragelemente vorgesehen. Auf diese Weise ist es möglich, Geräte in variabler Tiefenlage zu montieren.

Mit Rücksicht auf die hohen Anforderungen, die an die Funktionssicherheit komplexer Schaltungsanordnungen aus energietechnischen und elektronischen Steuerungsbaugruppen gestellt werden, empfiehlt es sich, vormontierte und vorverdrahtete Baueinheiten zu verwenden, die außerhalb einer Schaltanlage aufgebaut und sorgfältig geprüft werden können. Der Erfindung liegt die Aufgabe zugrunde, eine hierfür besonders geeignete Traganordnung zu schaffen.

Gemäß der Erfindung wird diese Aufgabe dadurch gelöst, daß der Geräteträger an beiden quer zu der Längsrichtung der Tragschienen verlaufenden Seiten etwa rechtwinklig abgewinkelte Schenkel besitzt, die je einen mittleren breiteren Bereich und nahe den beiden Enden je einen schmaleren Bereich aufweisen und daß die Zapfen von den schmaleren Bereichen ausgehend angeordnet und hinter den mittleren breiteren Bereich zurückstehend bemessen sind. Ein solcher Geräteträger hat die Eigenschaft, daß er auf einer Arbeitsfläche in einer stabilen Stellung abgelegt werden kann und daß hierbei die für die Befestigung in der Schaltanlage wesentlichen Zapfen unbelastet sind und daher nicht beschädigt werden können.

Um die Stabilität des Geräteträgers bei der Handhabung auf einer Arbeitsfläche zu verbessern, empfiehlt es sich, an den Enden des Geräteträgers abgewinkelte Stützen mit einer den breiteren Bereichen der abgewinkelten Schenkel entsprechenden Länge vorzusehen. Sowohl für die Handhabung auf einer Arbeitsfläche als auch für die Montage an den Tragschienen ist es vorteilhaft, wenn der Geräteträger im Bereich der schmaleren Bereiche der abgewinkelten Schenkel durch weitere Abwinklungen gebildetete, sich parallel zur Frontseite des Geräteträgers erstreckende Befestigungsschenkel mit zum Durchtritt des Gewindeschaftes der Befestigungsschrauben vorgesehenen Öffnungen besitzt und wenn ferner an der Frontseite des Geräteträgers mit den Öffnungen fluchtende, dem Kopf der Befestigungsschrauben entsprechende Einführöffnungen angeordnet sind. Die weiteren Abwinklungen bilden zur Frontseite des Geräteträgers parallele Flächen, die sowohl zur Auflage auf einer Arbeitsfläche als auch zur Auflage auf den Tragschienen geeignet sind. Ferner verbessern diese Abwinklungen die Biegesteifigkeit des Geräteträgers beträchtlich, so daß auch Geräteträger mit verhältnismäßig großer Länge und einer Bestückung mit verhältnismäßig schweren Geräten herstellbar sind.

Die Befestigung der Geräteträger läßt sich durch eine besondere Gestalt der Befestigungsschrauben erheblich vereinfachen. Hierzu ist vorgesehen, daß die Befestigungsschrauben eine Gesamtlänge besitzen, die größer als der Abstand der Frontseite des Geräteträgers von den erwähnten Befestigungsschenkeln bemessen ist. Auf diese Weise befindet sich der Kopf der Befestigungsschraube im nicht eingedrehten Zustand vor der Frontseite des Geräteträgers. Ferner kann der Kopf jeder Befestigungsschraube eine solche Länge besitzen, daß der Kopf bei noch nicht in die zugegörige Tragschiene eingedrehtem Gewindeschaft die Einführöffnung durchsetzt und der sich unter dem Einfluß der Schwerkraft einstellende Neigungswinkel der Befestigungsschraube durch Verkantung in der Einführöffnung beschränkt ist. Auf diese Weise ist es möglich, die Befestigungsschraube durch das Loch in der Frontseite des Geräteträgers einzustecken, ohne daß die Gefahr besteht, daß die Befestigungsschraube in den Raum hinter dem Geräteträger hineinfällt.

Durch weitere Merkmale ist zu erreichen, daß der Geräteträger sowohl für horizontale als auch für vertikale Montage geeignet ist. Hierzu kann jeder der Zapfen ein Halsstück und ein sich seitwärts von dem Halsstück erstreckendes hakenartig geformtes Kopfstück besitzen, wobei sich die Kopfstücke beider Zapfen in einem wenigstens der Dicke des Materials der Tragschiene entsprechenden Abstand von der Endkante des abgewinkelten Schenkels des Geräteträgers nach entgegengesetzten Richtungen erstrecken und wobei ferner die zur Aufnahme der Zapfen dienenden Löcher in den Tragschienen einen zum Durchtritt des Zapfens einschließlich seines Kopfstückes bemessenen längeren Bereich und einen anschließenden kürzeren, wenigstens für den Durchtritt des Halsstückes geeigneten Bereich besitzen und daß die Höhe des schmaleren Bereiches wenigstens der Materialdicke der Zapfen entspricht. Bei horizontaler Montage des Geräteträgers hintergreifen die Kopfstücke die Löcher in den Tragschienen unter dem Einfluß der Schwerkraft selbsttätig. Wird der Geräteträger dagegen in vertikaler Stellung an den Tragschienen angebracht, so genügt eine Verschiebung um die Materialdicke der Zapfen, um das formschlüssige Hintergreifen und damit die vorübergehende Lagesicherung des Geräteträgers zu bewirken.

Es empfiehlt sich, beiderseits des breiteren Bereiches jedes der Löcher einen schmaleren Bereich anzuordnen. Auf diese Weise entfällt bei vertikaler Stellung des Geräteträgers eine Überlegung, nach welcher Seite der Geräteträger zur Erlangung der formschlüssigen Lagesicherung zu verschieben ist.

Die Erfindung wird im folgenden anhand der in den Figuren dargestellten Ausführungsbeispiele näher erläutert.

Die Figur 1 zeigt einen Geräteträger in einer Seitenansicht.

In der Figur 2 ist eine Geräteträger bei der Anbringung an einer vertikalen Tragschiene perspektivisch dargestellt.

Die Figuren 3 und 4 zeigen eine Geräteträger nach der Montage an horizontalen Tragschienen von der Seite bzw. in einer Frontansicht.

Dir Figur 5 zeigt einen Schnitt durch einen Geräteträger zur Veranschaulichung des Befestigungsvorganges.

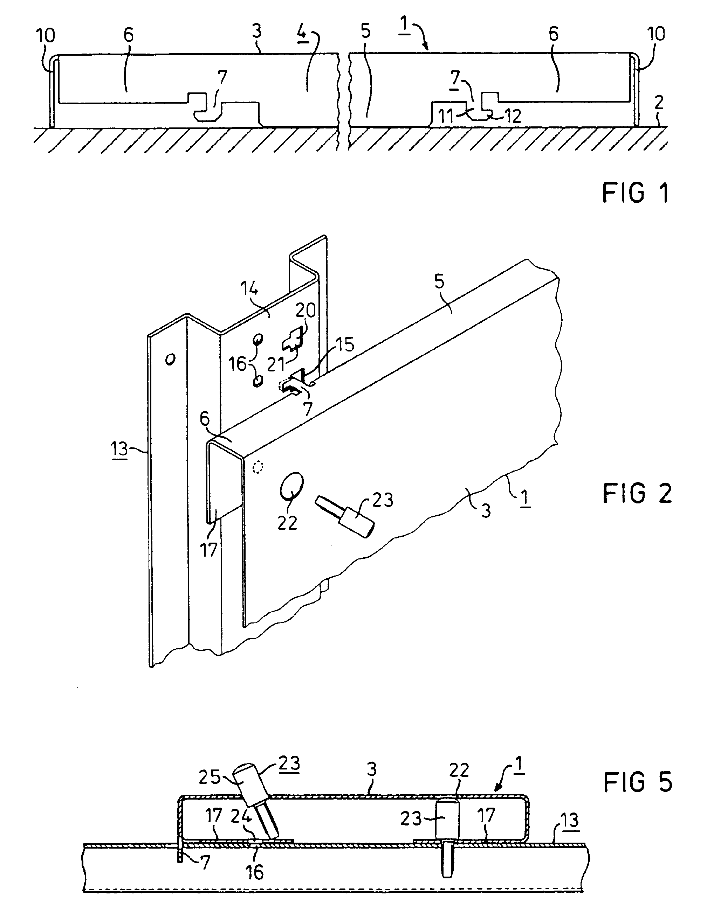

Der in der Figur 1 gezeigte Geräteträger 1 ist auf einer Arbeitsfläche 2 abgelegt dargestellt. Beidseitig einer frontseitigen Montagefläche 3 besitzt der Geräteträger 1 rechtwinklig abgewinkelte Schenkel 4, die einen mittleren, breiteren Bereich 5 und nahe den Enden jeweils einen schmaleren Bereich 6 aufweisen. Nahe dem Übergang von dem breiteren Bereich 5 zu den schmaleren Bereichen 6 ist jeweils ein Zapfen 7 angeordnet, der hinter den mittleren breiteren Bereich zurückstehend bemessen ist. An den Enden des Geräteträgers 1 sind ferner abgewinkelte Stüzten 10 mit einer dem mittleren Bereich entsprechenden Länge vorgesehen. Auf der Arbeitsfläche 2 ruht somit der Geräteträger 1 mit dem mittleren Bereich 5 der Schenkel 4 und den Stützen 10. Die Zapfen 7 treten daher mit der Arbeitsfläche 2 nicht in Berührung und können nicht beschädigt werden. Die Gestaltung der Zapfen 7 ist gleichfalls der Figur 1 zu entnehmen. Wie man erkennt, besitzen die Zapfen 7 ein Halsstück 11 und ein anschließendes hakenartiges Kopfstück 12. Dabei erstrecken sich die Kopfstücke 12 nach entgegengesetzten Richtungen, d. h. jeweils in Richtung der endseitigen Stütze 10. Der Abstand zwischen dem Kopfstück 12 und der Unterkante des schmaleren Bereiches 6 entspricht dabei wenigstens der Materialdicke einer in den folgenden Figuren näher dargestellten Tragschiene 13

Weitere Merkmale des Geräteträgers 1 und Einzelheiten des Zusammenwirkens mit Tragschienen 13 sind der Figur 2 zu entnehmen.

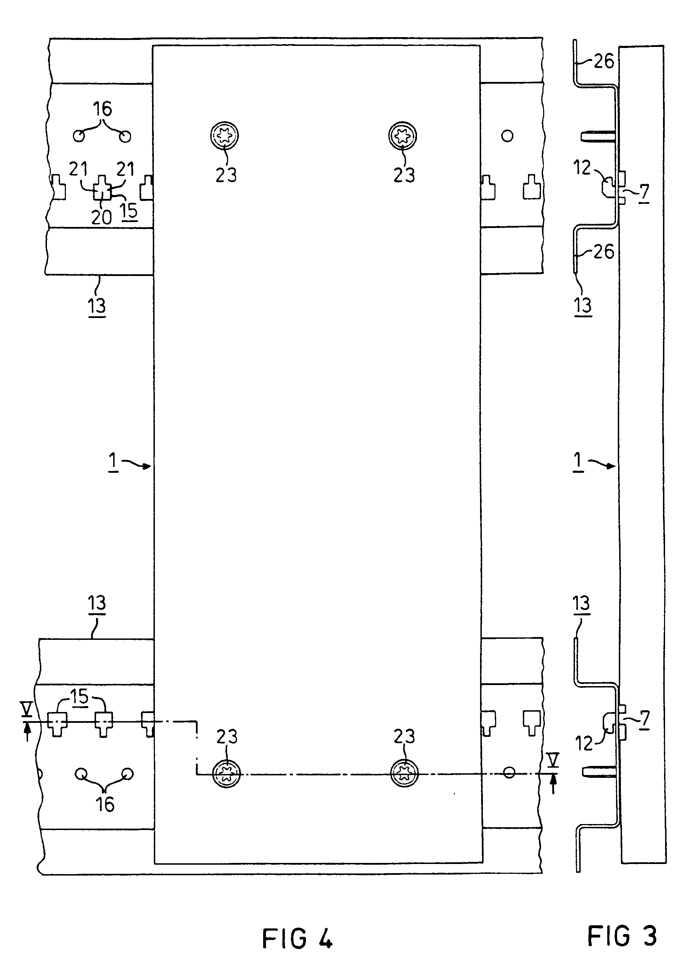

In der Figur 2 ist eine vertikale Tragschiene 13 gezeigt, die etwa hutprofilartig gestaltet ist und die in ihrem Mittelteil 14 mit Löchern 15 zur Aufnahme der Zapfen 7 und mit weiteren Löchern 16 für Befestigungsschrauben versehen ist. In der Figur 2 ist nur eine Tragschiene und nur ein Teil des Geräteträgers 1 gezeigt. Eine vollständige, aus zwei Tragschienen und einem Geräteträger bestehende Anordnung wird noch anhand der Figuren 3 und 4 erläutert. Zunächst wird die Figur 2 näher betrachtet, um das Zusammenwirken der Zapfen 7 mit den Tragschienen zu erläutern. Wie man erkennt, besitzt der Geräteträger 1 im Bereich der schmaleren Bereiche 6 der Schenkel 5 durch eine weitere Abwinklung gebildeten Befestigungsschenkel 17, mit dem der Geräteträger 1 auf dem Mittelteil 14 der Tragschiene 13 aufliegt. Der Zapfen 7 greift mit seinem Kopfstück 12 durch eine der Öffnungen 15 hindurch, wodurch eine formschlüssige Sicherung zustandekommt. Dies geschieht dadurch, daß die Öffnung 15 einen mittleren längeren Bereich 20 aufweisen, der zum Durchtritt des Zapfens mit seinem Kopfstück 12 ausreicht und daß beiderseits des mittleren Bereiches 20 jedes der Löcher 15 einen kürzeren Bereich 21 besitzt, der nur entsprechend der Breite des Halsstückes 11 bemessen ist. Der Bereiche 21 weist eine Breite von wenigstens der Materialdicke der Zapfen 7 auf. Werden also die Zapfen 7 in die Löcher 15 eingeführt und wird anschließend der Geräteträger 1 losgelassen, so gelangt er in der Anordnung gemäß der Figur 2 unter dem Einfluß der Schwerkraft in eine formschlüssig gesicherte Lage, in der die Kopfstücke 12 der Zapfen 7 unterhalb des mittleren Bereiches 15 hinter die Tragschiene 13 greifen. Durch eine Öffnung 22 in der Frontseite 3 des Geräteträgers 1 ist dann eine Befestigungsschraube 23 einführbar, die dann den Befestigungsschenkel 17 durchsetzt und in eines der Löcher 16 einschraubbar ist.

Anhand der Figuren 3 und 4 ist ferner zu erkennen, daß die Traganordnung auch für eine vertikale Anordnung eines Geräteträgers 1 geeignet ist. Hierzu sind zwei horizontal im Abstand voneinander angeordnete Tragschienen 13 gezeigt, auf denen ein Geräteträger 1 aufliegt. Die Tragschienen 13 sind spiegelbildlich derart angebracht, daß die Löcher 15 nahe den einander zugekehrten Kanten der Tragschienen liegen, während sich die Löcher 16 an den einander abgewandten Kanten befinden. Diese Lage der Löcher 15 entspricht der Richtung der Kopfstücke 12 der Zapfen 7. Die formschlüssige Befestigung des Geräteträgers 1 geschieht auch in dem Beispiel gemäß den Figuren 3 und 4 dadurch, daß der Geräteträger 1 mit seinen Befestigungsschenkeln auf die Tragschienen 13 aufgelegt wird, wobei die Zapfen 7 durch die Löcher 15 hindurchtreten können. Wird nun ausgehend hiervon der Geräteträger 1 nach links oder nach rechts um etwa die Materialdicke der Zapfen 7 verschoben, so gelangen die Kopfstücke 12 hinter die Tragschienen 13. Zur dauerhaften Befestigung sind in dem Beispiel gemäß den Figuren 3 und 4 je zwei Befestigungsschrauben 23 an jedem Ende des Geräteträgers 1 vorgesehen. Die Handhabung und Gestaltung der Befestigungsschrauben 23 wird im folgenden anhand der Figur 5 erläutert.

In der Figur 5, die den abgewinkelten Schnitt V-V im Figur 4 darstellt, sind eine Tragschiene 13 und ein Geräteträger 1 im Schnitt gezeigt, wobei ein Zapfen 7 und zwei Befestigungsschenkel 17 erkennbar sind. Ferner ist eines der Löcher 16 und eine hiermit fluchtendes Loch 24 in dem einen Befestigungsschenkel 17 gezeigt. Die Befestigungsschrauben 23 besitzen einen Kopf 25 solcher Länge, daß dieser sich im Bereich der Durchtrittsöffnung 22 in der Frontfläche 3 des Geräteträgers 1 befindet, wenn die Schraube 23 in das Loch 22 eingesteckt wird. Auch ist die Gesamtlänge der Befestigungsschraube 23 größer als der Abstand der Montagefläce 3 von dem Befestigungsschenkel 17. Die Befestigungsschraube 23 kann also nicht beim Einführungen in die Öffnung 22 verlorengehen. Ferner zeigt die Figur 5, daß der Durchmesser des Loches 22 und der Durchmesser des Kopfes 25 der Schraube 23 derart aneinander angepaßt sind, daß die Schraube 23 nicht in den Raum zwischen der Montagefläche 3 und der Tragschiene 13 hineinfallen kann. Vielmehr nimmt die Befestigungsschraube 23 aufgrund der Schwerkraft lediglich eine verkantete Stellung etwa entsprechend der Figur 5 ein. Ausgehend von dieser Stellung ist die Öffnung 24 leicht zu finden, um die Schraube in die Stellung gemäß dem rechten Teil der Figur 5 zu überführen, in welcher der Kopf 25 dicht unterhalb der Montagefläche 3 steht. Die Montagefläche 3 ist daher durch Befestigungsschrauben nicht unterbrochen, während andererseits der Schraubenkopf leicht zugänglich ist.

Bei der vorstehenden Beschreibung wird davon ausgegangen, daß die Tragschienen 13 in geeigneter Weise im Inneren eines Schaltschrankes oder einer mehrfeldrigen Schaltanlage befestigt sind. Wegen der vielfältigen Möglichkeiten einer solchen Befestigung sind nähere Einzelheiten nicht dargestellt. Wie jedoch insbesondere die Figuren 3 und 4 zeigen, stehen die Schenkel 26 der hutprofilartigen Tragschienen 13 für eine solche Befestigung zur Verfügung.

## Patentansprüche

1. Traganordnung für elektrische Geräte in einer Niederspannungs-Schaltanlage, bestehend aus zwei parallel zueinander angeordneten Tragschienen (13) und wenigstens einem die Tragschienen (13) überbrückenden Geräteträger (1) zur Aufnahme der Geräte, wobei der Geräteträger (1) mittels abragender Zapfen (7) in Löcher (15) der Tragschienen (13) einhängbar und durch Befestigungsschrauben (23) mit den Tragschienen (13) verbindbar ist, **dadurch gekennzeichnet**, daß der Geräteträger (1) an beiden quer zu der Längsrichtung der Tragschienen (13) verlaufenden Seiten etwa rechtwinklig abgewinkelte Schenkel (4) besitzt, die je einen mittleren breiteren Bereich (5) und nahe den beiden Enden je einen schmaleren Bereich (6) aufweisen und daß die Zapfen (7) von den schmaleren Bereichen (6) ausgehend angeordnet und hinter den mittleren breiteren Bereich (5) zurückstehend bemessen sind.

2. Traganordnung nach Anspruch 1, **dadurch gekennzeichnet**, daß der Geräteträger (1) an seinen Enden abgewinkelte Stützen (10) mit einer den breiteren Bereichen (5) der abgewinkelten Schenkel (4) entsprechenden Länge besitzt.

3. Traganordnung nach Anspruch 1 oder 2, **dadurch gekennzeichnet**, daß der Geräteträger (1) im Bereich der schmaleren Bereiche (6) der abgewinkelten Schenkel (4) durch weitere Abwinklungen gebildete, sich parallel zur Montagefläche (3) des Geräteträgers (1) erstreckende Befestigungsschenkel (17) mit zum Durchtritt des Gewindeschaftes der Befestigungsschrauben (23) vorgesehenen Öffnungen besitzt und daß an der Montagefläche (3) des Geräteträgers (1) mit den Öffnungen (24) fluchtende, dem Kopf (25) der Befestigungsschrauben (23) entsprechende Einführöffnungen (22) angeordnet sind.

4. Traganordnung nach Anspruch 3, **dadurch gekennzeichnet**, daß die Befestigungsschrauben (23) eine Gesamtlänge besitzen, die größer als der Abstand der Montagefläche (3) des Geräteträgers (1) von den Befestigungsschenkeln (17) bemessen ist.

5. Traganordnung nach Anspruch 4, **dadurch gekennzeichnet**, daß der Kopf (25) jeder Befestigungsschraube (23) eine solche Länge besitzt, daß der Kopf (25) bei noch nicht in die zugehörige Tragschiene (13) eingedrehtem Gewindeschaft die Einführöffnung (22) durchsetzt und der sich unter dem Einfluß der Schwerkraft einstellende Neigungswinkel der Befestigungsschraube (23) durch Verkantung in der Einführöffnung (22) beschränkt ist.

6. Traganordnung nach einem der vorangehenden Ansprüche, **dadurch gekennzeichnet**, daß jeder der Zapfen (7) ein Halsstück (11) und ein sich seitwärts von dem Halsstück (11) erstreckendes hakenartig geformtes Kopfstück (12) besitzt, wobei sich die Kopfstücke (12) beider Zapfen (7) in einem wenigstens der Dicke des Materials der Tragschiene (13) entsprechenden Abstand von der Endkante des abgewinkelten Schenkels (4) des Geräteträgers (1) nach entgegengesetzten Richtungen erstecken und wobei ferner die zur Aufnahme der Zapfen (7) dienenden Löcher (15) in den Tragschienen (13) einen zum Durchtritt des Zapfens (7) einschließlich seines Kopfstückes (12) bemessenen längeren Bereich (20) und einen anschließenden kürzeren, wenigstens für den Durchtritt des Halsstückes (11) geeigneten Bereich (21) besitzen und daß die Höhe des schmaleren Bereiches (21) wenigstens der Materialdicke der Zapfen (7) entspricht.

7. Traganordnung nach Anspruch 6, **dadurch gekennzeichnet**, daß beiderseits des breiteren Bereiches (20) jedes der Löcher (15) ein schmaler Bereich (21) angeordnet ist.

## Claims

1. Support arrangement for electrical equipment in low-voltage switchgear, consisting of two supporting rails (13), which are arranged parallel to each other, and at least one equipment carrier (1) to accommodate the equipment, which equipment carrier (1) bridges over the supporting rails (13), with it being possible to suspend the equipment carrier (1) in holes (15) of the supporting rails (13) by means of protruding pegs (7) and connect it (the equipment carrier (1)) to the supporting rails (13) by means of securing screws (23), characterised in that the equipment carrier (1) has, on its two sides which extend transversely relative to the longitudinal direction of the supporting rails (13), limbs (4) which are bent off substantially at right angles and have, in each case, a central comparatively broad region (5) and close to the two ends, in each case, a narrower region (6), and in that the pegs (7) are arranged so as to issue from the narrower regions (6) and are dimensioned so as to be set back behind the central broader region (5).

2. Support arrangement according to claim 1, characterised in that the equipment carrier (1) has, at its ends, supports (10) which are bent off and are of a length that corresponds to the broader regions (5) of the bent-off limbs (4).

3. Support arrangement according to claim 1 or 2, characterised in that the equipment carrier (1) has, in the region of the narrower regions (6) of the bent-off limbs (4), securing limbs (17) which are formed by further bent-off portions, extend parallel to the assembly face (3) of the equipment carrier (1) and have openings which are provided for the passage of the threaded shaft of the securing screws (23), and in that arranged on the assembly face (3) of the equipment carrier (1) there are inlet openings (22) which are aligned with the openings (24) and correspond to the head (25) of the securing screws (23).

4. Support arrangement according to claim 3, characterised in that the securing screws (23) have an overall length which is dimensioned so as to be greater than the distance of the assembly face (3) of the equipment carrier (1) from the securing limbs (17).

5. Support arrangement according to claim 4, characterised in that the head (25) of each securing screw (23) is of such a length that the head (25), with threaded shaft not yet screwed into the associated supporting rail (13), passes through the inlet opening (22), and the angle of inclination of the securing screw (23), which is set under the influence of the force of gravity, is limited by canting in the inlet opening (22).

6. Support arrangement according to one of the preceding claims, characterised in that each of the pegs (7) has a neck piece (11) and a head piece (12) which extends sideways from the neck piece (11) and is shaped in the manner of a hook, with the head pieces (12) of both pegs (7) extending in opposite directions and at a distance, corresponding at least to the thickness of the material of the supporting rail (13), from the end edge of the bent-off limb (4) of the equipment carrier (1) and with, furthermore, the holes (15) which are used to receive the pegs (7) in the supporting rails (13) having a comparatively long region (20) which is dimensioned for the passage of the peg (7) including its head piece (12) and having a connected shorter region (21) which is suitable at least for the passage of the neck piece (11), and in that the height of the narrower region (21) corresponds at least to the material thickness of the pegs (7).

7. Support arrangement according to claim 6, characterised in that a narrow region (21) is arranged on both sides of the broader region (20) of each of the holes (15).

## Revendications

1. Dispositif de support pour appareils électriques dans une installation de commutation basse tension, constitué par deux rails de support (13) parallèles entre eux et au moins un support d'appareils (1), qui s'étend au-dessus des rails de support (13) et sert à loger les appareils, le support d'appareils (1) pouvant être accroché, au moyen d'ergots saillants (7), dans des trous (15) des rails de support (13) et pouvant être relié aux rails de support (13) par des vis de fixation (23),
caractérisé par le fait
que le support d'appareils (1) possède, des deux côtés qui s'étendent transversalement par rapport à la direction longitudinale des rails de support (13), des branches (4) coudées approximativement à angle droit et qui possèdent respectivement une zone médiane plus large (5) et, à proximité des deux extrémités, respectivement une zone plus étroite (6), et que les ergots (7) sont disposés de manière à s'étendre à partir des zones les plus étroites (6) et sont dimensionnés de manière à être en retrait en arrière de la zone médiane plus large (5).

2. Dispositif de support suivant la revendication 1, caractérisé par le fait que le support d'appareils (1) comporte des appuis (10) qui sont coudés au niveau de leurs extrémités et possèdent une longueur qui correspond aux zones plus larges (5) des branches coudées (4).

3. Dispositif de support suivant la revendication 1 ou 2, caractérisé par le fait que le support d'appareils (1) possède, au niveau des zones plus étroites (6) des branches coudées (4), des branches de fixation (17) qui sont formées par d'autres parties coudées et s'étendent parallèlement à la surface de montage (3) du support d'appareils (1) et possèdent des ouvertures qui sont prévues pour le passage de la tige filetée des vis de fixation (23), et que des ouvertures d'introduction (22), qui sont alignées avec les ouvertures (24) et correspondent à la tête (25) des vis de fixation (23), sont disposées sur la surface de montage (3) du support d'appareils (1).

4. Dispositif de support suivant la revendication 3, caractérisé par le fait que les vis de fixation (23) possèdent une longueur totale, qui est supérieure à la distance entre la surface de montage (3) du support d'appareils (1) et les branches de fixation (17).

5. Dispositif de support suivant la revendication 4, caractérisé par le fait que la tête (25) de chaque vis de fixation (23) possède une longueur telle que la tête (25) traverse l'ouverture d'introduction (22) alors que la tige filetée n'est pas encore vissée dans le rail de support associé (13), et que l'angle d'inclinaison de la vis de fixation (23), qui se règle sous l'influence de la force de pesanteur, est limité par coincement dans l'ouverture d'introduction (22).

6. Dispositif de support suivant l'une des revendications précédentes, caractérisé par le fait que chacun des ergots (7) possède un élément en forme de col (11) et un élément de tête (12) qui s'étend latéralement à partir de l'élément en forme de col (11) et est réalisé sous la forme d'un crochet, les éléments de tête (12) des deux ergots (7) s'étendant à une distance, qui correspond au moins à l'épaisseur du matériau du rail de support (13), du bord d'extrémité de la branche coudée (4) du support d'appareils (1), dans des directions opposées, tandis qu'en outre les trous (15), qui servent à loger les ergots (7) et sont ménagés dans les rails de support (13), possèdent une partie plus longue (20), dimensionnée pour le passage de l'ergot (7) y compris son élément de tête (12), et une partie plus courte (21), qui s'y raccorde et convient au moins pour le passage de l'élément en forme de col (11), et que la hauteur de la partie plus étroite (21) correspond au moins à l'épaisseur du matériau des ergots (7).

7. Dispositif de support suivant la revendication 6, caractérisé par le fait qu'une zone étroite (21) est présente des deux côtés de la zone plus large (20) de chacun des trous (15).
